# EUROPÄISCHE PATENTSCHRIFT

(11) **EP 2 921 767 B1**
(45) Veröffentlichungstag und Bekanntmachung des Hinweises auf die Patenterteilung: **10.05.2017**
(21) Anmeldenummer: 15159557.6
(22) Anmeldetag: 18.03.2015
(51) Int. Cl.: F21S 8/06, F21S 9/02, F21Y 115/10, F21V 23/00

(54) **LEUCHTE FÜR NORMALBETRIEB UND NOTBETRIEB**
LAMP FOR NORMAL MODE AND EMERGENCY OPERATION
ÉCLAIRAGE POUR UN FONCTIONNEMENT NORMAL ET FONCTIONNEMENT D'URGENCE

(30) Priorität: 21.03.2014 DE 202014101309 U
(43) Veröffentlichungstag der Anmeldung: 23.09.2015
(73) Patentinhaber: Zumtobel Lighting GmbH, 6850 Dornbirn (AT)
(72) Erfinder: Schubnell, Sebastian, 88079 Kressbronn (DE); Kottek, Thomas, 6890 Lustenau (AT); Olariu, Cristian, 6850 Dornbirn (AT); Peter, Norbert, 6845 Hohenems (AT); Skergeth, Sascha, 6890 Lustenau (AT); Kohler, Michael, 6850 Dornbirn (AT)
(74) Vertreter: Thun, Clemens

(56) Entgegenhaltungen:
- WO-A2-2011/007977
- CH-B1- 697 541
- DE-A1-102004 006 005
- DE-U1-202012 009 636
- JP-A- 2006 019 060
- US-A- 5 408 394
- US-A1- 2009 072 970

## Beschreibung

Die Erfindung betrifft eine Leuchte für Normalbetrieb und Notbetrieb.

Aus dem Stand der Technik ist eine Beleuchtungsanordnung bekannt, die einerseits Leuchten für die allgemeine Beleuchtung umfasst und andererseits spezielle Not-Leuchten für einen Notbetrieb der Beleuchtungsanordnung, beispielsweise wenn die normale Stromversorgung ausfallt. Im Notbetrieb lassen sich die Not-Leuchten durch eine entsprechende Batterie mit Notstrom versorgen. Die Not-Leuchten sind unabhängig von den Leuchten für die allgemeine Beleuchtung installiert, wodurch der Installationsaufwand entsprechend hoch ist.

Weiterhin ist aus dem Stand der Technik eine Beleuchtungsanordnung mit Leuchten bekannt, bei der die Lichtquellen der Leuchten, mit denen die allgemeine Beleuchtung erzeugt wird, auch zur Erzeugung der Notbeleuchtung verwendet werden. Wenn die normale Stromversorgung ausfällt, lassen sich die Lichtquellen durch eine zentrale Batterie mit Notstrom versorgen. Diese Leuchten weisen optische Elemente auf, die zur Beeinflussung des von der Lichtquelle erzeugten Lichts dienen, derart, dass das Licht für die normale Beleuchtung geeignet abgegeben wird. Diese Art der Lichtabgabe ist jedoch in der Regel nicht für eine Lichtabgabe in einem Notfall geeignet.

Aus der CH 697 541 B 1 ist eine Leuchte mit einer Lampe und Leuchtdioden bekannt. Bei Betrieb über das normale Stromnetz leuchtet die Lampe und auch die Leuchtdioden geben Licht ab. Bei einem Ausfall der normalen Stromversorgung werden die Leuchtdioden über eine Not-Stromzufuhranlage mit Strom versorgt.

Aus der US 5,408,394 ist eine Leuchte mit einer Hauptlichtquelle und einer Notlichtquelle bekannt. Im Notfall wird die Notlichtquelle durch eine Batterie mit Strom versorgt.

Aus der US 2009/0072970 A1 ist eine Leuchte mit einer batteriebetriebenen Notlichtquelle bekannt. Aus der JP 2006-019060 A ist eine Leuchte mit Leuchtstofflampen und LEDs bekannt.

Der Erfindung liegt die Aufgabe zugrunde, eine entsprechende verbesserte Leuchte anzugeben. Insbesondere soll sich die Leuchte besonders für einen Normalbetrieb und einen Notbetrieb eignen.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist Leuchte vorgesehen, die Mittel zur Abgabe eines gerichteten Lichts aufweist, sowie Mittel zur Abgabe eines diffusen Lichts. Weiterhin weist die Leuchte eine Steuervorrichtung zur Ansteuerung der Mittel zur Abgabe eines gerichteten Lichts und der Mittel zur Abgabe eines diffusen Lichts auf. Dabei ist die Steuervorrichtung dazu ausgestaltet, in einem Notbetrieb der Leuchte die Mittel zur Abgabe eines gerichteten Lichts und die Mittel zur Abgabe eines diffusen Lichts derart anzusteuern, dass das diffuse Licht abgegeben wird und das gerichtete Licht nicht abgegeben wird. Dabei ist die Steuervorrichtung derart gestaltet, dass die Leistung, mit der die Mittel zur Abgabe eines diffusen Lichts im Notfall betrieben werden, gegenüber dem Normalbetrieb der Leuchte reduziert ist.

Grundsätzlich lässt sich durch ein diffuses Licht ein größeres Areal beleuchten, als durch ein gerichtetes Licht. Zudem lässt sich bei einer Beleuchtung mit einem diffusen Licht besser vermeiden, dass sich signifikante Helligkeitsunterschiede ausbilden, die für eine Orientierung in einem Notfall hinderlich sind. Daher eignet sich das diffuse Licht besonders als Notbeleuchtung. Zudem lässt sich dadurch, dass das gerichtete Licht nicht abgegeben wird, eine hohe Energienutzung erzielen, die gerade in einem Notfall bedeutsam ist.

Vorzugsweise ist die Leuchte dabei derart ausgestaltet, dass von der Leuchte in dem Notbetrieb außer dem diffusen Licht kein weiteres Licht abgegeben wird. Hierdurch lässt sich eine besonders gute Nutzung der im Notfall zur Verfügung stehenden Energie erzielen.

Vorzugsweise ist die Leuchte derart gestaltet, dass bei einer für einen Betrieb der Leuchte vorgesehenen Orientierung der Leuchte durch die Mittel zur Abgabe eines diffusen Lichts das diffuse Licht in den unteren Halbraum abgegeben wird. Hierdurch lässt sich im Notfall eine entsprechende Beleuchtung eines unter der Leuchte befindlichen Bodenbereichs erzielen; dies ist für eine Orientierung im Notfall von besonderer Bedeutung.

Vorzugsweise weisen die Mittel zur Abgabe eines gerichteten Lichts eine erste Lichtquelle auf und die Mittel zur Abgabe eines diffusen Lichts eine zweite Lichtquelle, die nicht mit der ersten Lichtquelle identisch ist. Hierdurch lässt sich die Ansteuerung im Notfall besonders einfach gestalten.

Vorzugsweise umfassen die erste Lichtquelle und/oder die zweite Lichtquelle eine LED-Lichtquelle mit wenigstens einer LED. In diesem Fall eignet sich die Ansteuerung im Notfall besonders.

Vorzugsweise weist die Leuchte weiterhin ein Leuchtengehäuse auf, in dem sowohl die erste Lichtquelle, als auch die zweite Lichtquelle angeordnet sind. Hierdurch sind eine besonders einfache Bauweise und eine einfache Installation der Leuchte ermöglicht.

Vorzugsweise weist die Leuchte weiterhin einen ersten Lichtabgabebereich auf, über den das gerichtete Licht abgegeben wird und einen zweiten Lichtabgabebereich, über den das diffuse Licht abgegeben wird. Weiterhin vorzugsweise ist dabei der zweite Lichtabgabebereich den ersten Lichtabgabebereich umgebend ausgebildet, insbesondere ringförmig umschließend. Hierdurch ist im Notfall eine Lichtabgabe ermöglicht, die von einem vergleichsweise großen Bereich ausgeht.

Vorzugsweise weist die Leuchte weiterhin ein Linsenelement zur Erzeugung einer Richtungsbegrenzung des gerichteten Lichts und/oder ein diffus wirkendes optisches Element zur Erzeugung einer Streuung des diffusen Lichts auf. Auf diese Weise lässt sich das gerichtet Licht bzw. das diffuse Licht besonders geeignet bilden.

Besonders eignet sich die Leuchte, wenn sie in Form einer Pendelleuchte ausgebildet ist.

Die Erfindung wird im Folgenden anhand eines Ausführungsbeispiels und mit Bezug auf die Zeichnungen näher erläutert. Es zeigen:
- Fig. 1: eine schematische Querschnitt-Skizze einer erfindungsgemäßen Leuchte und
- Fig. 2: eine Ansicht von unten auf einen Abschnitt der Leuchte.

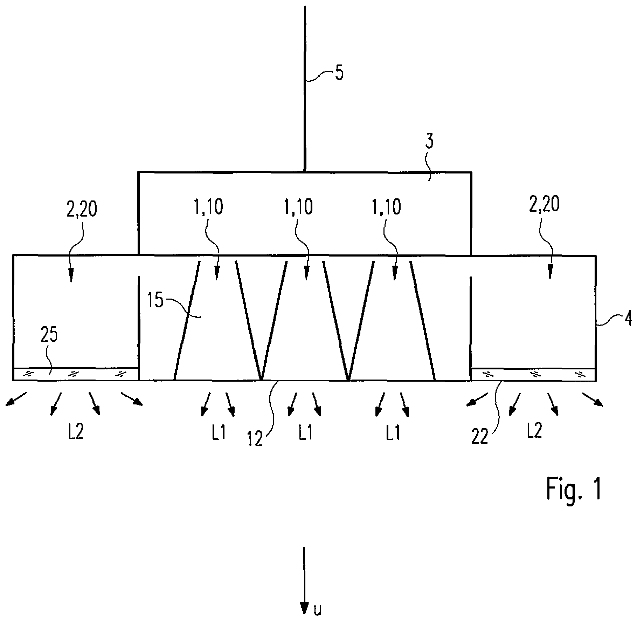

Fig. 1 zeigt eine schematische Querschnitt-Darstellung einer erfindungsgemäßen Leuchte. Die Leuchte umfasst Mittel 1 zur Abgabe eines gerichteten Lichts *L1*, sowie Mittel 2 zur Abgabe eines diffusen Lichts *L2*. Wie durch kleine Pfeile in der Zeichnung angedeutet, wird das diffuse Licht *L2* in einen deutlich größeren Raumwinkelbereich abgegeben, als das gerichtete Licht *L1.*

Vorzugsweise umfassen die Mittel 1 zur Abgabe eines gerichteten Lichts *L1* eine erste Lichtquelle 10 und die Mittel 2 zur Abgabe eines diffusen Lichts *L2* eine zweite Lichtquelle 20, die nicht identisch mit der ersten Lichtquelle 10 ist. Im gezeigten Beispiel umfasst die erste Lichtquelle 10 eine LED-Lichtquelle mit wenigstens einer LED; insbesondere kann die erste Lichtquelle 10 durch die LED-Lichtquelle mit wenigstens einer LED gebildet sein. Die zweite Lichtquelle 20 umfasst im gezeigten Beispiel eine weitere LED-Lichtquelle mit wenigstens einer weiteren LED; insbesondere kann auch die zweite Lichtquelle 20 entsprechend durch diese weitere LED-Lichtquelle gebildet sein. Im gezeigten Beispiel sind die LEDs der ersten Lichtquelle 10 und die weiteren LEDs der zweiten Lichtquelle 20 matrixartig angeordnet, vorzugsweise in einer horizontalen Ebene.

Weiterhin weist die Leuchte eine Steuervorrichtung 3 auf, die zur Ansteuerung der Mittel 1 zur Abgabe eines gerichteten Lichts *L1* und der Mittel 2 zur Abgabe eines diffusen Lichts *L2* ausgebildet ist. Dabei ist die Steuervorrichtung 3 insbesondere dazu ausgestaltet, in einem Notbetrieb der Leuchte die Mittel 1 zur Abgabe eines gerichteten Lichts *L1* und die Mittel 2 zur Abgabe eines diffusen Lichts *L2* derart anzusteuern, dass das diffuse Licht *L2* abgegeben wird und das gerichtete Licht *L1* nicht abgegeben wird. Das diffuse Licht *L2* eignet sich im Vergleich zu dem gerichteten Licht *L1* besonders für eine Notfall-Beleuchtung, da es grundsätzlich einen größeren Bereich, insbesondere Bodenbereich gleichmäßig aufhellen kann, was für eine Orientierung in einem Notfall vorteilhaft ist.

Die Leuchte ist also dazu ausgestaltet einerseits in einem Normalbetrieb mit einer normalen Stromversorgung betrieben zu werden und andererseits in einem Notfall in einem Notbetrieb, in dem die normale Stromversorgung nicht zur Verfügung steht, mit einer Notstromversorgung. Bei der normalen Stromversorgung kann es sich beispielsweise um eine Wechselstromversorgung handeln und bei der Notstromversorgung um eine Gleichstromversorgung, die beispielsweise von einer zentralen Batterie zur Verfügung gestellt wird.

Energetisch vorteilhaft ist dabei vorgesehen, dass durch die Steuervorrichtung 3 die Leistung, mit der die Mittel 2 zur Abgabe eines diffusen Lichts *L2* im Notfall betrieben werden, gegenüber dem Normalbetrieb der Leuchte reduziert ist. Insbesondere kann die Ansteuerung dabei derart sein, dass im Notfall eine, durch eine entsprechende Norm vorgegebene Mindestbeleuchtung sichergestellt ist.

Im gezeigten Beispiel ist die Leuchte als Pendelleuchte ausgestaltet. Sie weist hierzu eine Abhängevorrichtung, beispielsweise inForm eines Seils 5 auf. Die Gestaltung ist dabei derart, dass bei einer für einen Betrieb der Leuchte vorgesehenen Orientierung der Leuchte durch die Mittel 2 zur Abgabe eines diffusen Lichts *L2* das diffuse Licht *L2* in den unteren Halbraum abgegeben wird, also nach unten, wie in Fig. 1 durch einen Pfeil *u* angedeutet. Auf diese Weise lässt sich im Notfall besonders geeignet ein unter der Leuchte befindlicher Bodenbereich beleuchten.
Energetisch besonders vorteilhaft kann vorgesehen sein, dass von der Leuchte in dem Notbetrieb außer dem diffusen Licht kein weiteres Licht abgegeben wird. Beispielsweise kann die Leuchte weiterhin Mittel zur Erzeugung einer indirekten Beleuchtung aufweisen, die im Notbetrieb durch die Steuervorrichtung 3 ebenfalls nicht aktiviert sind. Eine indirekte Beleuchtung ist für eine Notfall-Orientierung nicht zwingend erforderlich und eher weniger hilfreich.

Im gezeigten Beispiel ist die Leuchte so gestaltet, dass sie einen ersten Lichtabgabebereich 12 aufweist, über den das gerichtete Licht *L1* abgegeben wird, sowie einen zweiten Lichtabgabebereich 22, über den das diffuse Licht *L2* abgegeben wird.

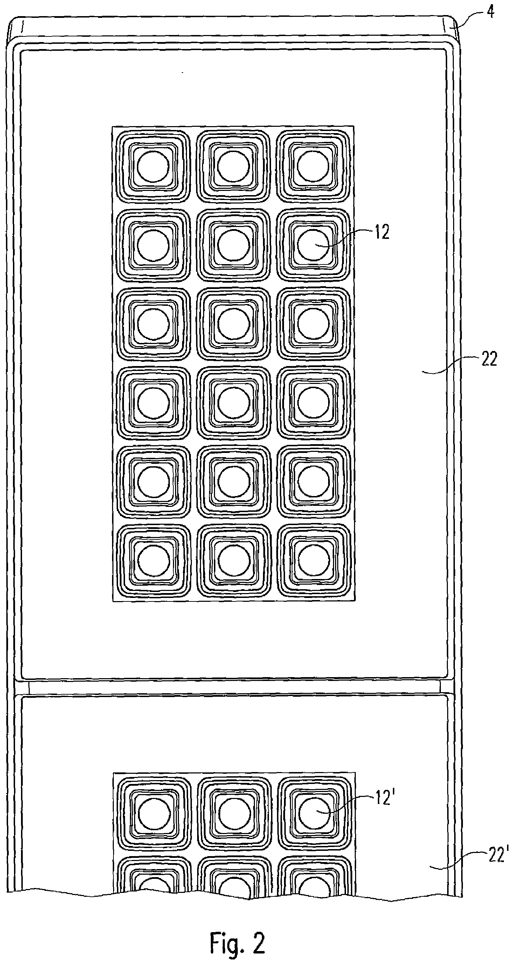

In Fig. 2 ist eine Sicht von unten auf einen Abschnitt der Leuchte skizziert. Man erkennt den ersten Lichtabgabebereich 12 und den zweiten Lichtabgabebereich 22.

Wie in diesem Beispiel der Fall, ist der zweite Lichtabgabebereich 22 den ersten Lichtabgabebereich 12 umgebend ausgebildet, insbesondere ringförmig umschließend.

Die Leuchte kann weiterhin so ausgestaltet sein, dass - wie in Fig. 2 ansatzweise angedeutet - mehrere entsprechende erste Lichtabgabebereiche 12, 12' und mehrere entsprechende zweite Lichtabgabebereiche 22, 22' ausgebildet sind, wobei die Leuchte mehrere Module aufweist, so dass jedes der Module jeweils einen ersten Lichtabgabebereich 12, 12' und einen rahmenförmig um diesen herum ausgebildeten zweiten Lichtabgabebereich 22, 22' aufweist.

Wie in Fig. 1 skizziert, kann vorgesehen sein, dass die Leuchte wenigstens ein Linsenelement 15 zur Erzeugung einer Richtungsbegrenzung des gerichteten Lichts *L1* und/oder ein diffus wirkendes optisches Element 25 zur Erzeugung einer Streuung des diffusen Lichts *L2* aufweist. Im gezeigten Beispiel weist die erste Lichtquelle 10 mehrere LEDs auf, wobei jeder der LEDs ein Linsenelement 15 zugeordnet ist. Das optische Element 25 zur Erzeugung einer Streuung kann beispielsweise durch eine insbesondere horizontal orientierte Streuscheibe gebildet sein.

Vorzugsweise weist die Leuchte weiterhin ein mit der Steuervorrichtung verbundenes Betriebsgerät zur Stromversorgung der ersten Lichtquelle 10 und der zweiten Lichtquelle 20 auf. Dabei ist die Gestaltung so, dass seitens der Leuchte ein Umschalten auf einen Notstrombetrieb in Abhängigkeit des zur Verfügung gestellten externen Stroms bzw. der externen Spannungsversorgung erfolgt. Beispielsweise kann die Gestaltung derart sein, dass in einem Normalfall das Betriebsgerät eingangsseitig mit einem Wechselstrom versorgt wird und in einem Notfall mit einem Gleichstrom, der wie erwähnt beispielsweise von einer zentralen Batterie stammt. Dementsprechend ist die Gestaltung vorzugsweise weiterhin wie folgt: Wenn sich eingangsseitig am Betriebsgerät die Wechselstromversorgung in eine Gleichstromversorgung ändert, wird durch die Steuervorrichtung 3 automatisch vom Normal-Betrieb auf den Notbetrieb umgeschaltet, also insbesondere die erste Lichtquelle 10 ausgeschaltet und die zweite Lichtquelle 20 wird bzw. bleibt eingeschaltet. Die gegebenenfalls vorgesehen indirekte Beleuchtung wird ebenfalls ausgeschaltet.

Im Fall einer Beleuchtungsanordnung mit mehreren erfindungsgemäßen Leuchten kann, wie an sich bekannt, für die Stromversorgung eine zentrale Batterie vorgesehen sein; allerdings kann alternativ auch vorgesehen sein, dass hierfür in der Leuchte bzw. in jeder der Leuchten jeweils eine entsprechende Batterie oder ein Akkumulator vorgesehen ist.

## Patentansprüche

1. Leuchte aufweisend
- Mittel (1) zur Abgabe eines gerichteten Lichts (*L1*),
- Mittel (2) zur Abgabe eines diffusen Lichts (*L2*) und
- eine Steuervorrichtung (3) zur Ansteuerung der Mittel (1) zur Abgabe eines gerichteten Lichts (*L1*) und der Mittel (2) zur Abgabe eines diffusen Lichts (*L2*),
**dadurch gekennzeichnet,**
**dass** die Steuervorrichtung (3) dazu ausgestaltet ist, in einem Notbetrieb der Leuchte die Mittel (1) zur Abgabe eines gerichteten Lichts (*L1*) und die Mittel (2) zur Abgabe eines diffusen Lichts (*L2*) derart anzusteuern, dass das diffuse Licht (*L2*) abgegeben wird und das gerichtete Licht (*L1*) nicht abgegeben wird, wobei die Steuervorrichtung (3) derart gestaltet ist, dass die Leistung, mit der die Mittel (2) zur Abgabe eines diffusen Lichts (L2) im Notfall betrieben werden, gegenüber dem Normalbetrieb der Leuchte reduziert ist.

2. Leuchte nach Anspruch 1,
die derart ausgestaltet ist, dass von der Leuchte in dem Notbetrieb außer dem diffusen Licht (*L2*) kein weiteres Licht abgegeben wird.

3. Leuchte nach Anspruch 1 oder 2,
die derart gestaltet ist, dass bei einer für einen Betrieb der Leuchte vorgesehenen Orientierung der Leuchte durch die Mittel (2) zur Abgabe eines diffusen Lichts (*L2*) das diffuse Licht (*L2*) in den unteren Halbraum abgegeben wird.

4. Leuchte nach einem der vorhergehenden Ansprüche,
bei der die Mittel (1) zur Abgabe eines gerichteten Lichts (*L1*) eine erste Lichtquelle (10) aufweisen und die Mittel (2) zur Abgabe eines diffusen Lichts (*L2*) eine zweite Lichtquelle (20), die nicht mit der ersten Lichtquelle (10) identisch ist.

5. Leuchte nach Anspruch 4,
bei der die erste Lichtquelle (10) und/oder die zweite Lichtquelle (20) eine LED-Lichtquelle mit wenigstens einer LED umfassen.

6. Leuchte nach Anspruch 4 oder 5,
weiterhin aufweisend
- ein Leuchtengehäuse (4), in dem sowohl die erste Lichtquelle (10), als auch die zweite Lichtquelle (20) angeordnet sind.

7. Leuchte nach einem der vorhergehenden Ansprüche,
weiterhin aufweisend
- einen ersten Lichtabgabebereich (12), über den das gerichtete Licht (*L1*) abgegeben wird und
- einen zweiten Lichtabgabebereich (22), über den das diffuse Licht (*L2*) abgegeben wird.

8. Leuchte nach Anspruch 7,
bei der der zweite Lichtabgabebereich (22) den ersten Lichtabgabebereich (21) umgebend ausgebildet ist, insbesondere ringförmig umschließend.

9. Leuchte nach einem der vorhergehenden Ansprüche,
weiterhin aufweisend
- ein Linsenelement (15) zur Erzeugung einer Richtungsbegrenzung des gerichteten Lichts (*L1*) und/oder ein diffus wirkendes optisches Element (25) zur Erzeugung einer Streuung des diffusen Lichts (*L2*).

10. Leuchte nach einem der vorhergehenden Ansprüche
in Form einer Pendelleuchte.

## Claims

1. A lamp having
- means (1) for emitting a directed light (L1),
- means (2) for emitting a diffuse light (L2) and
- a control device (3) for controlling the means (1) for emitting a directed light (L1) and the means (2) for emitting a diffuse light (L2),
**characterized in**
**that** the control device (3) is designed to control the means (1) for emitting a directed light (L1) and the means (2) for emitting a diffuse light (L2) in an emergency operation of the lamp, in such a manner that the diffuse light (L2) is emitted and the directed light (L1) is not emitted, wherein the control device (3) is designed in such a manner that the power, with which the means (2) for emitting a diffuse light (L2) are operated in an emergency, is reduced in comparison to the normal operation of the lamp.

2. A lamp according to Claim 1,
which is designed in such a manner that no further light is emitted from the lamp in the emergency operation besides the diffuse light (L2).

3. A lamp according to Claim 1 or 2,
which is designed in such a manner that in an orientation of the lamp provided for an operation of the lamp the diffuse light (L2) is emitted in the lower half space by the means (2) for emitting a diffuse light (L2).

4. A lamp according to any one of the preceding claims,
in which the means (1) for emitting a directed light (L1) has a first light source (10) and the means (2) for emitting a diffuse light (L2) has a second light source (20), which is not identical with the first light source (10).

5. A lamp according to Claim 4
in which the first light source (10) and/or the second light source (20) comprises a LED light source with at least one LED.

6. A lamp according to Claim 4 or 5,
further having
- a lamp housing (4), in which both the first light source (10), as well as the second light source (20) are arranged.

7. A lamp according to any one of the preceding claims,
further having
- a first light emitting area (12), via which the directed light (L1) is emitted and
- a second light emitting area (22), via which the diffuse light (L2) is emitted.

8. A lamp according to Claim 7,
in which the second light emitting area (22) is designed surrounding the first light emitting area (21), in particular surrounding it annularly.

9. A lamp according to any one of the preceding claims,
further having
- a lens element (15) for generating a directional limitation of the directed (L1) and/or an optical element (25) acting diffusely for generating a diffusion of the diffuse light (L2).

10. A lamp according to any one of the preceding claims
In the form of a pendant lamp.

## Revendications

1. Luminaire comprenant :
- des moyens (1) d'émission d'une lumière dirigée (L1),
- des moyens (2) pour l'émission d'une lumière diffuse (L2) et
- un dispositif de commande (3) pour la commande des moyens (1) pour l'émission d'une lumière dirigée (L1) et des moyens (2) pour l'émission d'une lumière diffuse (L2),
**caractérisé en ce que**
le dispositif de commande (3) est conçu pour commander, dans un mode de fonctionnement d'urgence du luminaire, les moyens (1) pour l'émission d'une lumière dirigée (L1) et les moyens (2) pour l'émission d'une lumière diffuse (L2) de façon à ce que la lumière diffuse (L2) soit émise et à ce que la lumière dirigée (L1) ne soit pas émise, le dispositif de commande (3) étant conçue de façon à ce que la puissance avec laquelle les moyens (2) pour l'émission d'une lumière diffuse (L2) fonctionnent en cas d'urgence, est réduite par rapport au fonctionnement normal du luminaire.

2. Luminaire selon la revendication 1,
qui est conçu de façon à ce qu'aucune lumière supplémentaire n'est émise par le luminaire en mode de fonctionnement d'urgence exceptée la lumière diffuse (L2).

3. Luminaire selon la revendication 1 ou 2,
qui est conçu de façon à ce que, dans le cas d'une orientation du luminaire, prévue pour un fonctionnement du luminaire, les moyens (2) pour l'émission d'une lumière diffuse (L2) émettent la lumière diffuse (L2) dans la moitié inférieure.

4. Luminaire selon l'une des revendications précédentes,
dans lequel les moyens (1) pour l'émission d'une lumière dirigée (L1) comprennent une première source de lumière (10) et les moyens (2) pour l'émission d'une lumière diffuse (L2) comprennent une deuxième source de lumière (20) qui n'est pas identique à la première source de lumière (10).

5. Luminaire selon la revendication 4,
dans lequel la première source de lumière (10) et/ou la deuxième source de lumière (20) comprennent une source de lumière à LED avec au moins une LED.

6. Luminaire selon la revendication 4 ou 5,
comprenant en outre
- un boîtier de luminaire (4) dans lequel sont disposées aussi la première source de lumière (10) que la deuxième source de lumière (20).

7. Luminaire selon l'une des revendications précédentes,
comprenant en outre
- une première zone d'émission de lumière (12) par l'intermédiaire de laquelle la lumière dirigée (L1) est émise et
- une deuxième zone d'émission de lumière (22), par l'intermédiaire de laquelle la lumière diffuse (L2) est émise.

8. Luminaire selon la revendication 7,
dans lequel la deuxième zone d'émission de lumière (22) est conçue de façon à entourer la première zone d'émission de lumière (21), plus particulièrement avec une forme annulaire.

9. Luminaire selon l'une des revendications précédentes,
comprenant en outre
- un élément de lentille (15) pour la production d'une limitation de direction de la lumière dirigée (L1) et/ou un élément optique à effet de diffusion (25) pour la production d'une diffusion de la lumière diffuse (L2).

10. Luminaire selon l'une des revendications précédentes,
sous la forme d'un luminaire pendulaire.
